# EUROPEAN PATENT APPLICATION

(11) **EP 3 035 171 A1**
(43) Date of publication of application: **22.06.2016**
(21) Application number: 15194781.9
(22) Date of filing: 16.11.2015
(51) Int. Cl.: G06F 3/041

(54) **APPARATUS, SYSTEM AND METHOD FOR COMMUNICATION OF TOUCH SENSOR INFORMATION**

(30) Priority: 16.12.2014 US 201414572685
(71) Applicant: Intel Corporation, Santa Clara, CA 95054 (US)
(72) Inventor: Suzuki, Nobuyuki, Portland, OR 97229 (US)
(74) Representative: Hufton, David Alan

(57) **Abstract**

Techniques and mechanisms to communicate touch sensor information via physical layer (PHY) circuitry that provides a high speed, low voltage interface. In an embodiment, a source device and a sink device each include a respective differential PHY (D-PHY) and respective protocol logic to support a touch serial interface protocol. Analog circuitry of the sink device receives an output from a touch sensor array, and the respective D-PHYs exchange touch sensor data based on such output. The source device processes digital data based on the exchanged touch sensor data. In another embodiment, any generation of a software interrupt message or a firmware interrupt message in response to identification of an occurrence of a gesture event based on the output is performed after the touch sensor data is received by the sink device.

## Description

### BACKGROUND

### 1. Technical Field

This invention relates generally to the processing of information generated with a touch interface. More particularly, certain embodiments include, but are not limited to, the communication of touch sensor information for digital signal processing.

### 2. Background Art

Touch screens and touch pads are two examples of touch interfaces by which a user may interact with any of the variety of processing-capable platforms. As more users adopt smartphones, tablet computers and other touch interface enabled devices, the importance of user interaction with a computing device via a touchpad, touch screen or other human input device (HID) increases. Commonly, a touch input device for smartphone, tablet or other device is implemented via an array of sensors to which analog circuitry is coupled to detect user touch and provide this information to a touch controller, which typically is implemented using digital circuitry - e.g., in the same integrated circuit (IC) or a separate IC. In general, this touch controller operates to receive inputs from one or more analog circuits that connect to the touch array and determine touch locations, filter false touches, and provide an HID packet for output to other circuitry of the device such as a host processor.

Touch processing typically involves analyzing a capacitance or equivalent data from a touch sensor array and then identifying data points that resemble a fingertip, palm, etc. Once a cluster of such data points is identified, additional processing is performed to compute the characteristics of the touch such as location coordinates, width/height of the digit, pressure and so forth.

Serial peripheral interface (SPI) is an interface currently used to enable a full duplex, serial exchange of touch information between analog circuitry and digital signal processor (DSP) circuitry of a touch interface system. However, successive generations of touch screens continue to grow in size and/or resolution. As a result, touch interface circuitry has to communicate a greater amount and/or diversity of touch information for digital processing. One option to mitigate this problem is to simply increase the parallelism of such data communication - e.g., with additional interface contacts (pins, balls, pads), additional signal lines, etc. to accommodate the additional bandwidth needed. However, this has a cost in terms of additional complexity, materials and device size. Another option is to run a touch interface at a higher speed. However, this usefulness of this approach is limited by, among other things, a resulting increase in signal noise. As a result, there is an increasing need to efficiently support the data throughput demands of next-generation touch sensor array hardware.

### BRIEF DESCRIPTION OF THE DRAWINGS

The various embodiments of the present invention are illustrated by way of example, and not by way of limitation, in the figures of the accompanying drawings and in which:
FIG. 1 is a high-level functional block diagram illustrating elements of a system for processing touch sensor information according to an embodiment.
FIG. 2A is a flow illustrating elements of a method for operating a source of touch sensor information according to an embodiment.
FIG. 2B is a flow illustrating elements of a method for operating a touch information sink according to an embodiment.
FIG. 3 is a high-level functional block diagram illustrating elements of a differential physical layer to exchange touch sensor information according to an embodiment.
FIG. 4 is a state diagram illustrating a protocol to exchange touch sensor information according to an embodiment.
FIG. 5A is a table showing signaling to communicate touch sensor information according to an embodiment.
FIG. 5B is a table showing signaling to configure a source of touch sensor information according to an embodiment.
FIG. 6A is a table showing a short packet structure to communicate touch sensor information according to an embodiment.
FIG. 6B is a table showing a long packet structure to communicate touch sensor information according to an embodiment.
FIG. 7 is a block diagram illustrating elements of a computing system for generating and processing touch sensor information according to an embodiment.
FIG. 8 is a block diagram illustrating elements of a mobile device for generating and processing touch sensor information according to an embodiment.

### DETAILED DESCRIPTION

Embodiments discussed herein variously provide techniques and/or mechanisms to communicate information, generated with a touch sensor array, to digital signal processor circuitry. In one embodiment, a touch serial interface (TSI) including differential physical layer (PHY) functionality provides for a high speed, low voltage mechanism that enables digital processing to be offloaded from an IC, packaged device and/or other hardware that includes analog touch sensor circuit logic. For example, digital processing of touch sensor information may be performed at a system on chip (SOC) that is coupled to touch sensor controller circuitry via a differential PHY (D-PHY).

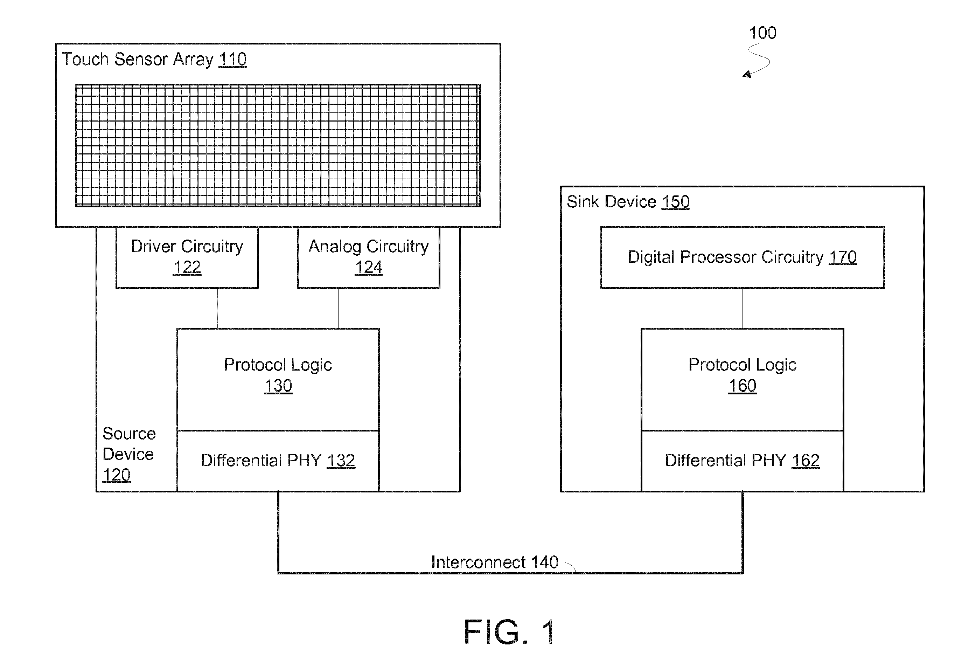

Referring now to FIG. 1, a system 100 to generate and process touch sensor information according to an embodiment is shown. System 100 may include source device 120 coupled to a touch sensor array 110, the source device 120 to generate data representing a user interaction with touch sensor array 110. Touch sensor array 110 may include, for example, any of the variety of capacitance touch sensor elements adapted from known touch sensor techniques. However, the particular type of sensor elements included in touch sensor array 110 is not limiting on certain embodiments, and any of the variety of other touch sensor mechanisms may be used.

Source device 120 may include circuitry to operate touch sensor array 110. By way of illustration and not limitation, driver circuitry 120 may control activation of individual sensor elements of touch sensor array 110. Alternatively or in addition, such circuitry may include analog circuitry 124 to receive analog output signals that are based on activation of such touch sensor elements and a user's interaction with touch sensor array 110. Some or all of the operations of driver circuitry 122 and/or analog circuitry 124 may be adapted from conventional array driver and/or sensor techniques, which are not described herein and are not limiting on certain embodiments.

System 100 and may support a high throughput interface to communicate touch information from source device 120 to digital processing logic that is included in or couple to system 100. For example, source device 120 may be coupled via an interconnect 142 to sink device 150 of system 100. Source device 120 and sink device 150 may serve as a "source" and "sink," respectively, at least with respect to a communication of touch sensor information. However, certain embodiments may further support other communications wherein source device 120 and sink device 150 function as sink and source, respectively.

An IC and/or data package comprising source device 120 may be distinct from another IC and/or data package comprising sink device 150 - e.g., where sink device 150 resides in a system on chip (SoC) that is coupled to source device 120 via interconnect 140. In one embodiment, interconnect 140 couples a differential PHY 132 of source device 120 to a differential PHY 162 of sink device 150. Communication between PHYs 132, 162 may be characterized by an embedded clock signal, low voltage (e.g., at or below 1400 millivolts signal amplitude), bidirectional channel control and/or other advantages provided by various differential PHYs.

Operation of, and communication between, differential PHYs 132, 162 may be based on (e.g., meet some or all requirements of) any of a variety of D-PHY standards including, for example, a D-PHY standard of the MIPI® Alliance. Examples of such MIPI® D-PHY standards include the MIPI® D-PHY v1.0 standard released September 22, 2009 by the MIPI® Alliance, the MIPI® D-PHY v1.1 standard approved December 16, 2011 by the MIPI® Alliance and the MIPI® D-PHY v1.2 standard introduced in September, 2014 by the MIPI® Alliance. In some embodiments, PHYs 132, 162 are based on a low-power physical layer standard such as that of the MIPI® Alliance Specification for M-PHY^{SM} Version 1.00.00 of February 8, 2011 and approved on April 28, 2011. In still other embodiments, PHYs 132, 162 are based on a physical layer standard for camera and/or display interfaces such as that of the MIPI® Alliance Specification for C-PHY™ Version 1.0 released September 2014.

Source device 120 may comprise analog-to-digital (A/D) conversion logic - e.g. included in or coupled to analog circuitry 124 - to prepare at least in part for the communication of touch information via differential PHY 132. However in some embodiments, of source device 120 and sink device 150, only sink device 150 may perform certain types of digital processing of information generated with touch sensor array 110 - e.g., where such processing includes operations to generate an interrupt message to be sent to a software process (e.g., an operating system process) or a firmware process of system 100 (or of logic coupled to system 100). For example, system 100 may be a touch sensor subsystem of a larger platform (not shown) including a host processor and/or other logic configured to receive a human interface device (HID) event interrupt directly or indirectly from sink device 150. Sink device 150 may perform one or more operations including identifying that an interrupt is to be generated in response to identification of an occurrence of a gesture event, where identification of such occurrence of the gesture event is based on the output from the touch sensor array 110. In an embodiment, any such identifying that the interrupt is to be generated is performed only after the first touch sensor data is received by sink device 150 via interconnect 140.

By way of illustration and not limitation, sink device 150 may perform operations to detect for the occurrence of a touch event and/or a gesture event. Some processing in aid of identifying a gesture event and/or a touch event may take place at source device 120. For example, noise suppression processing, data segmentation processing, etc. may be performed at source device 120, where partially pre-processed touch information generated by such processing is sent to sink device 150. The pre-processed touch information may include data identifying touch interface coordinates that currently correspond to a particular touch status. However, actual evaluation of such partially pre-processed touch information to identify a gesture event (and in some embodiments, a touch event) may take place only at sink device 150.

A touch event may be detected, for example, by digital processor logic 170 evaluating touch sensor information from source device 120, where such evaluating is based on *a priori* reference information including one or more touch event criteria. In one embodiment, processing to detect for a touch event includes digital processor logic 170 comparing touch sensor information to such touch event criteria information. Based on such an evaluation, it may be determined, for example, whether one or more thresholds have been exceeded - e.g., by a size of an area of touch sensor array 110 that is under pressure, a magnitude of such pressure, a rate of change of such pressure, a duration of such pressure and/or the like. Where the exceeding of the one or more thresholds is indicated, digital processor logic 170 may indicated to an agent (not shown) that a touch event has been detected.

A gesture event may be detected, for example, based on multiple touch events. By way of illustration and not a limitation, a sequence of detected touch events may be evaluated based on *a priori* reference information including one or more gesture event criteria - e.g., including comparing information describing the sequence of touch events to the gesture event criteria information. Based on such an evaluation, it may be determined, for example, whether one or more reference gesture conditions have been satisfied - e.g., by a rate of change of the sequence, a duration of the sequence, a concurrency or other relationship of the sequence to a different sequence and/or the like. Where such one or more characteristics have been satisfied, digital processor logic 170 may indicated to a host processor, display controller or other agent (not shown) that a particular gesture event has been detected. Detection of a touch event and/or a gesture event may be based, for example, on operations adapted from conventional touch and/or gesture detection techniques, which are not detailed herein and are not limiting on certain embodiments. In some embodiments, identification of the occurrence of a touch event and/or a gesture event may be performed at source device 120 - e.g., where sink device 150 subsequently determines based on such identifying by source device 120 that a event interrupt is to be sent to executing software and/or firmware.

In an embodiment, source device 120 includes protocol logic 130 comprising circuitry to facilitate a protocol for an exchange via interconnect 140 of information that is based on, and/or is to facilitate, operation of touch sensor array 110. For example, protocol logic 130 may support preparation of touch information, generated with analog circuitry 124, for communications via differential PHY 132 that be based on a MIPI® D-PHY standard. Alternatively or in addition, protocol logic 160 of sink device 150 may comprise circuitry to further facilitate such a protocol. For example, protocol logic 160 may support receipt of touch information from via differential PHY 162 - e.g., according to a MIPI® D-PHY standard. In one embodiment, protocol logic 130 and protocol logic 160 communicate with one another to variously configure one or more modes of touch sensor array 110 and/or source device 120.

In supporting communications that are based on a differential PHY standard, such as any of various MIPI® D-PHY standards, system 100 allows for high speed transfer of "raw" touch information to circuitry that provides digital processing functionality. Moreover, as D-PHY applies a high-speed differential signaling, it dramatically reduces the risk of electro-magnetic interference in such high-speed communications.

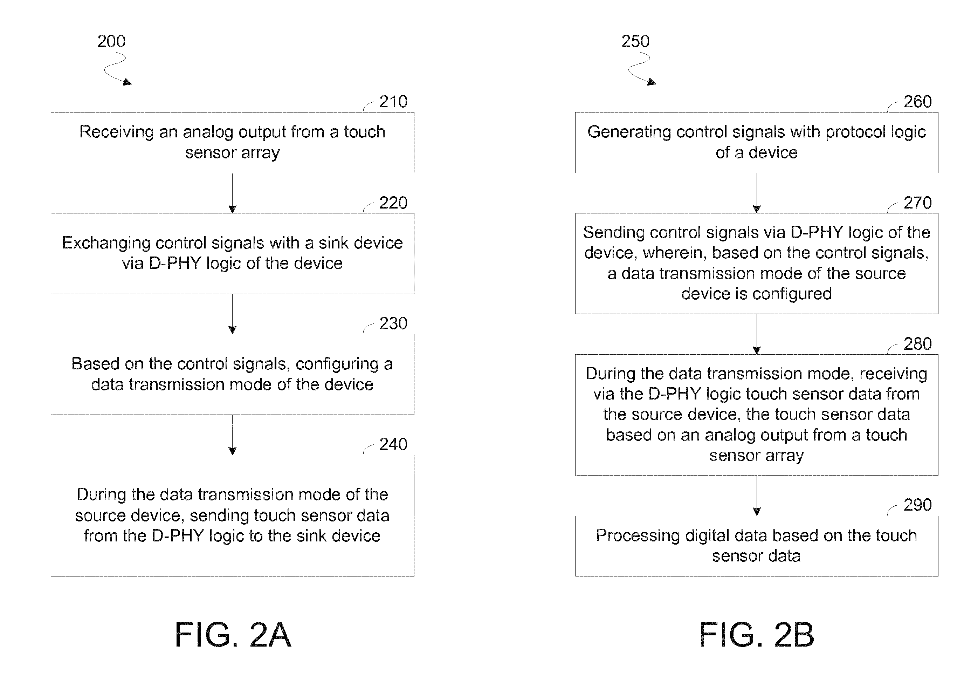

FIG. 2A illustrates elements of a method 200 for communicating touch sensor information with touch interface controller logic according to an embodiment. Method 200 may be performed, for example, at a device having some or all of the features of source device 120.

In an embodiment, method 200 includes, at 210, receiving an analog output from a touch sensor array. For example, the analog output may be received at 210 by analog circuitry - such as analog circuitry 124 - of the device performing method 200. The analog output may include, for example, some or all of a frame of data generated by the touch sensor array. Such a frame may include sensor information for each of a plurality of rows of sensors and/or a plurality of columns of sensors of the touch sensor array. The analog circuitry may include or couple to analog-to-digital (A/D) conversion circuitry and/or other circuit logic of the device, where such logic is to convert, format and/or otherwise prepare for D-PHY communication touch sensor information that is represented by the analog output.

At least with respect to some communication of touch sensor information, the device performing method 200 may function as a source device for another (sink) device that is coupled thereto via differential physical layer (D-PHY) logic of the device. For example, method 200 may further comprise, at 220, exchanging control signals with the sink device via the D-PHY logic of the device. Such D-PHY logic may be based on, for example, to a D-PHY standard issued by the MIPI® Alliance (also referred to herein as a "MIPI D-PHY standard"). Although certain embodiments are not limited in this regard, the D-PHY logic of the device may couple the device to a system-on-chip that includes the sink device.

Based on the control signals exchanged at 220, method 200 may at 230, configure a data transmission mode of the device. For example, the D-PHY logic of the device may couple to the sink device via an interconnect, wherein exchanging the control signals at 220 includes protocol logic of the device exchanging a bus turnaround (BTA) message that is to transfer control of the interconnect. In response to the BTA message, the protocol logic may configure the device to control the interconnect during a transmission of a data packet to the sink device. In another embodiment, the protocol logic may configure the device to control the interconnect during a transmission of a configuration request packet to the sink device.

The protocol logic may include a state machine, microcontroller, application specific integrated circuit (ASIC) or other such circuitry operable to variously configure different states of the device. Alternatively or in addition, such protocol logic may be configured to generate a data packet or such data structure based on the analog output. For example, the protocol logic may encapsulate payload data in a packet that is to further comprise header information, error correction code information, word count information, checksum information and/or the like. Such payload data may represent touch sensor information that, for example, is generated based on A/D conversion of the analog output received at 210.

During the data transmission mode configured at 230, method 200 may, at 240, send touch sensor data from the D-PHY logic to the sink device, the touch sensor data based on the analog output received at 210. The touch sensor data may be subjected to digital data processing by the sink device. For example, any generation of a software interrupt message or a firmware interrupt message in response to identification of an occurrence of a gesture event based on the analog output may be performed after the touch sensor data is received by the sink device. In various embodiments, any identification of an occurrence of a gesture event (and in some embodiments, a touch event) based on the analog output is performed after the sink device receives the touch sensor data. Identification of a gesture event may include evaluating digital data based on reference information including one or more gesture event criteria. Identification of a touch event may include evaluating digital data based on one or more touch event criteria of such reference information - e.g., where identification of a gesture event includes identification of multiple touch events.

FIG. 2B illustrates elements of a method 250 to exchange touch sensor information for processing according to an embodiment. Method 250 may be performed, for example, at a device having some or all of the features of source device 150. In an embodiment, method 250 is performed by a device that is coupled to another device that is to function as a source of touch sensor information. Operation of such a source device may include some or all of method 200.

Method 250 may include, at 260, generating control signals with protocol logic of the sink device. For example, the generating at 260 may be performed with protocol logic 160 to communicate with protocol logic 130. In an embodiment, method 200 further comprises, at 270, sending control signals to the source device with D-PHY logic of the device, wherein a data transmission mode of the source device is configured based on the control signals. The D-PHY logic may be based on a MIPI D-PHY standard, for example.

Method 250 may further include, at 280, receiving, during the data transmission mode, touch sensor data from the source device, wherein the touch sensor data is received via the D-PHY logic. The touch sensor data received at 280 may be based on an analog output from a touch sensor array - e.g., where the touch sensor data is that which is transmitted at 240 of method 200.

At 290, method 250 may process digital data based on the touch sensor data. By way of illustration and not limitation, the processing at 290 may include protocol logic 160, digital processor circuitry 170 and/or other logic of sink device 150 generating the digital data based on the touch sensor data received at 280, and digital processor circuitry 170 evaluating the digital data. Such evaluating may be based on reference information - e.g., to identify an occurrence of a touch event and/or an occurrence of a gesture event. In an embodiment, any identification of an occurrence of a gesture event based on the analog output - e.g., including any identification by the processing at 290 - is performed after the touch sensor data is received at 280.

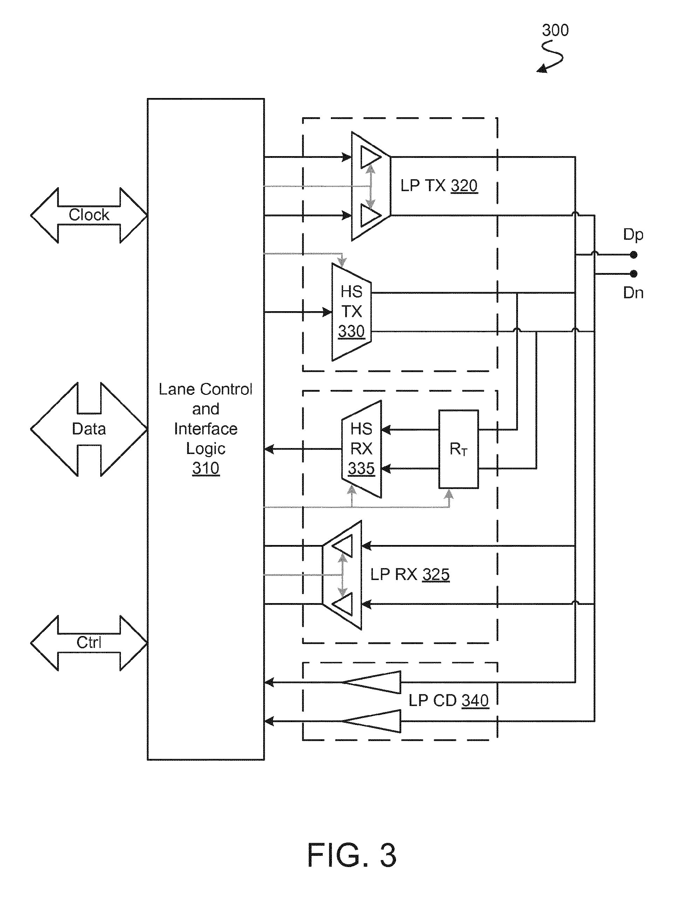

FIG. 3 illustrates elements of a device 300 including a differential PHY to exchange touch sensor information according to an embodiment. Although certain embodiments are not limited in this regard, D-PHY logic of device 300 may be based on a MIPI® D-PHY standard. For example, D-PHY logic of device 300 may include lane control and interface logic 310 to exchange clock signaling, data signaling and/or control (Ctrl) signaling with protocol logic (not shown) that is included in or coupled to device 300. In an embodiment, device 300 includes some or all of the features of source device 120, where the D-PHY logic shown is to exchange some or all such signaling with protocol logic 130 and/or analog circuitry 124. In another embodiment, device 300 may have some or all of the features of sink device 150, where the D-PHY logic shown is to exchange some or all such signaling with protocol logic 160 and/or digital processor circuitry 170.

The D-PHY logic may further comprise circuitry coupled between lane control and interface logic 310 and input/output (I/O) contacts Dp, Dn of device 300 that are to exchange a differential signal pair with another device coupled to device 300. Lane control and interface logic 310 may comprise one or more decoders, serializers, deserializers, transmit control logic, error detection logic, state machines and/or other circuitry to prepare information from a protocol stack side of device 300 for communication via contacts Dp, Dn. Alternatively or in addition, such circuitry of lane control and interface logic 310 may convert communications via contacts Dp, Dn into information for the protocol stack side of device 300. Such operations of lane control and interface logic 310 may be based on lane control/interface requirements of a MIPI® D-PHY standard, which are not detailed herein to avoid obscuring features of certain embodiments.

In one illustrative embodiment, signal transmission circuitry coupled between lane control and interface logic 310 and I/O contacts, Dp, Dn includes low power transmit logic LP TX 320 to support a low power (and low speed) transmission mode with lane control and interface logic 310. Additionally or alternatively, such signal transmission circuitry may include high speed transmit logic HS TX 330 to support a high speed (and high power) transmission mode with lane control and interface logic 310. Signal receiver circuitry of the D-PHY may include low power receive logic LP RX 325 to support a low power (low speed) receive mode with lane control and interface logic 310. Such signal receiver circuitry may additionally or alternatively include high speed receiver logic HS RX 335 to support a high speed (and high power) receive mode with lane control and interface logic 310. In an embodiment, low power contention detection logic LP CD 340 is coupled to detect for contention situations to be resolved or otherwise addressed with lane control and interface logic 310.

HS TX 330 and HS RX 335 may be used for the exchange of relatively high-speed data and clock signals - e.g., where HS TX 330 and HS RX 335 use low-voltage differential signaling for signal transmission/reception. HS RX 335 may be a differential line receiver operating with a switchable parallel input termination R_{T} between contacts Dp, Dn. By contrast, LP TX 320 and LP RX 325 may serve as relatively low power signaling mechanisms - e.g., where LP TX 320 is a push-pull driver and LP RX 325 is an un-terminated, single-ended receiver. Low power signaling of the D-PHY may be characterized by a 1.2 volt (V) signaling range, for example, whereas high speed signaling of the D-PHY may be characterized by a 200 millivolt (mV) swing. However, any of a variety of other signaling voltage levels may variously characterize operation of HS TX 330, HS RX 335, LP TX 320 and/or LP RX 325, according to different embodiments.

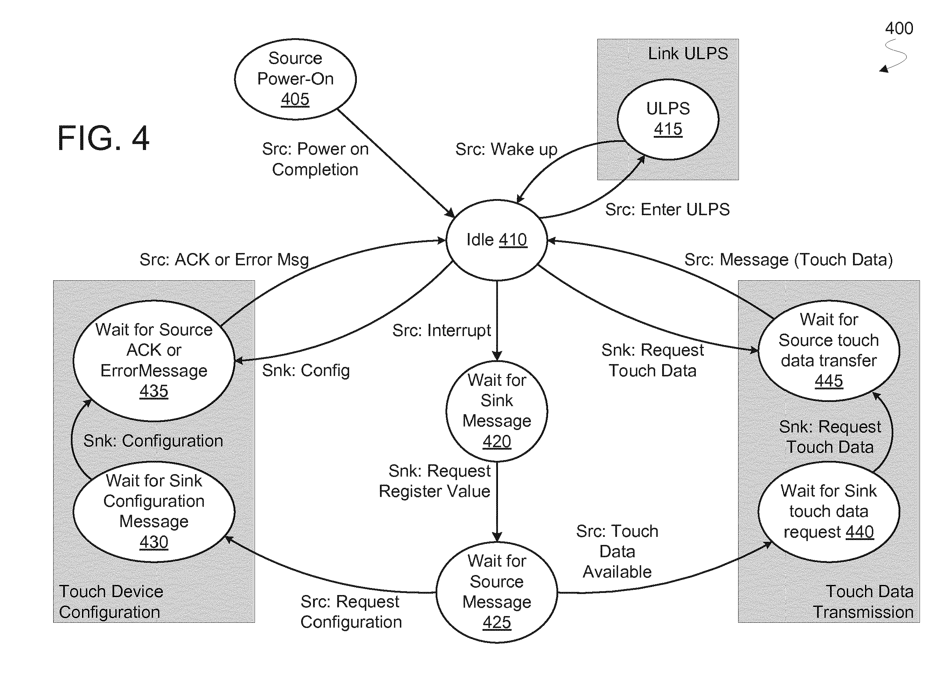

Turning now to FIG. 4, a state machine 400 represents a sequence of states for communicating touch sensor information according to an embodiment. State machine 400 may be a logical representation of various states of a source device to provide touch sensor information and/or states of a sink device to receive and process such touch sensor information. In an embodiment, state machine 400 is implemented with devices that are each to perform a respective one of methods 200, 250.

State machine 400 includes a state 405 during which a source device (e.g., source device 120) is undergoing operations to power on. Afterward, the source device (Src) may communicate completion of such power-on operations, resulting in a transition to an Idle state 410. During Idle state 410, the source device may be ready to transition to any of an ultra-low power state (ULPS) 415, and various Wait states 420, 435, 445.

In an embodiment, the source device itself may initiate a transition to ULPS 415 in response to detecting that some power saving criteria has been met. For example, the source device may detect that any output from a touch sensor array (included in our coupled to the source device) is expected only after some threshold period of time. Similarly, a transition back from ULPS 415 to Idle 410 may be initiated by the source device in response to detecting that an activation criteria has been met - e.g. where it is detected that touch sensor information is to be expected within some threshold period of time.

Alternatively or in addition, the source device may signal an interrupt to transition state machine 400 to Wait state 420, during which the source device is to wait for a request message from the sink device. In an embodiment, signaling of the interrupt includes the source device sending a high-speed clock signal during Idle 410. During Wait state 420, the sink device (Snk) may request some register value or other information, resulting in a transition to another Wait state 425, during which the sink device is to wait for a message from the source device. The register value is retrieved from a register to which the source device writes to indicate that some configuration of the source device - e.g., a power-on configuration, an internal power-mode change, a signal bias configuration and/or the like - is being requested before touch data is sent to the sink device. From Wait state 425, state machine 400 may transition to a Wait state 440 in response to the source device signaling that there is touch sensor data available to be transmitted to the sink device. During Wait state 440, the source device is to wait for the sink device to send a message requesting the touch sensor data. Such a request may result in a transition to Wait state 445. A transition from Wait state 445 to Idle state 410 may be in response to the source device completing a communication of touch sensor data to the sink device. A transition from Idle state 410 to Wait state 445 may be in response to the sink device requesting additional touch sensor data.

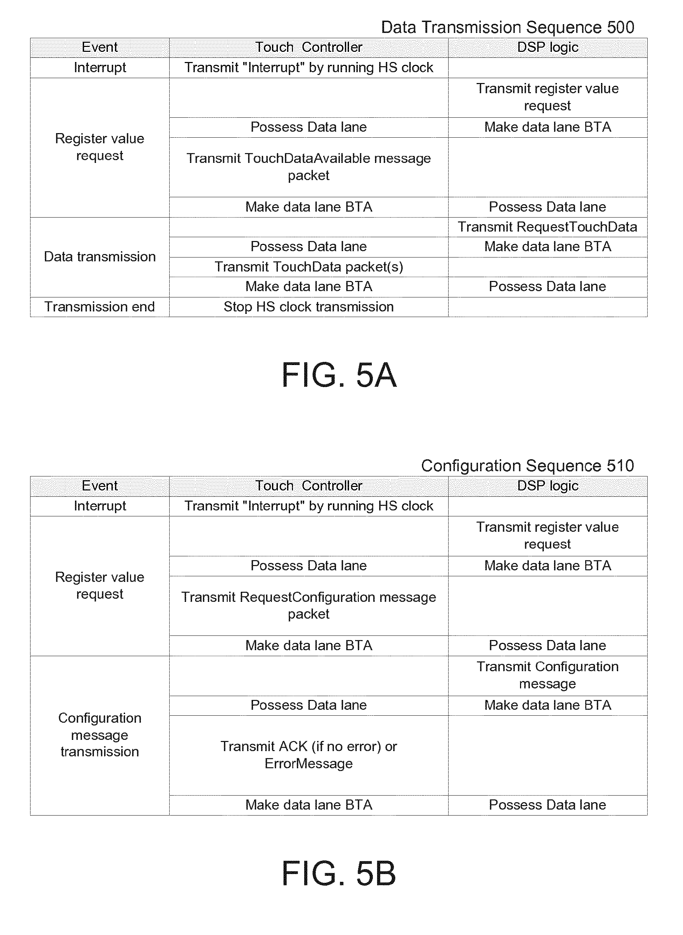

FIG. 5A illustrates, in table form, a sequence 500 of signals that may be exchanged - e.g., during a sequence of states 410, 420, 425, 440, 445 - to communicate touch sensor information according to an embodiment. In the illustrative embodiment of FIG. 5A, such signals are exchanged between a touch controller (source device) and digital signal processor logic (sink device) that are coupled to one another via respective D-PHYs. As shown in sequence 500, the touch controller and digital signal processor (DSP) logic may exchange bus turn around (BTA) control signals to variously transition control of an interconnect between the touch controller and the DSP logic.

Alternatively or in addition, state machine 400 may transition from Wait state 425 to another Wait state 430 in response to the source device requesting a particular configuration of the sink device. During Wait state 430, the source device may wait for the sink device to signal completion of such configuration. Completion of the requested configuration may result in a transition to Wait state 435, during which the sink device is to wait for the source device to send either an acknowledgement (ACK) message or a message indicating, for example, an error regarding the sink device configuration. A transition from Wait state 435 to Idle state 410 may be in response to the source device communicating such an ACK message or an error message. A transition from Idle state 410 to Wait state 435 may be in response to the sink device communicating additional configuration information to the source device. FIG. 5B shows, in table form, another sequence 510 of signals exchanged - e.g., during a sequence of states 410, 420, 425, 430, 435 - to configure sink device hardware according to an embodiment. As with FIG. 5A, signals of sequence 510 may be exchanged between a touch controller and DSP logic coupled to one another via respective D-PHYs.

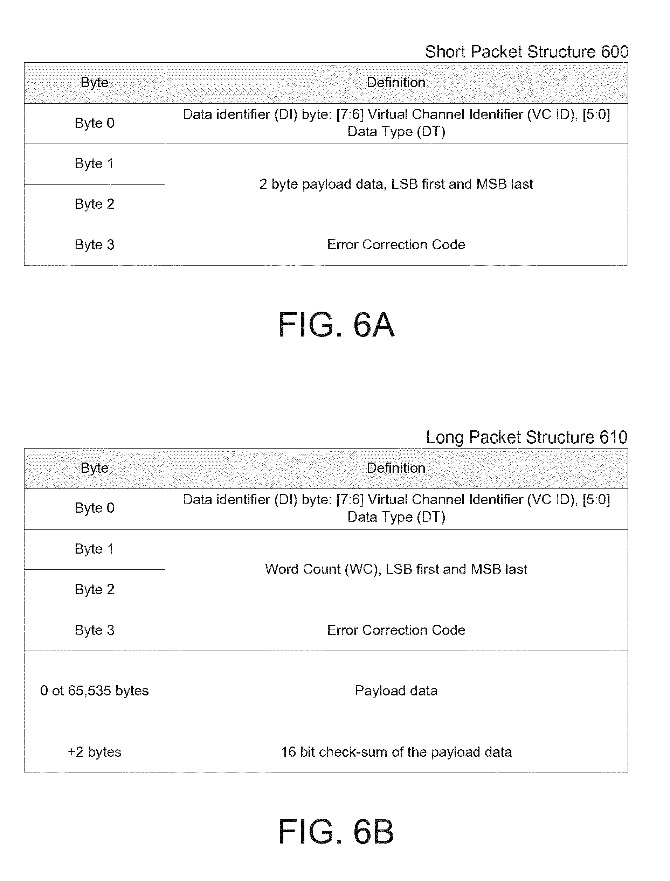

FIGs. 6A, 6B show features of a short packet structure 600 and a long packet structure 610, respectively, to variously communicate touch sensor information from a source device to a sink device according to an embodiment. Touch sensor data may be communicated from a source device to a sink device in packets each having a respective structure such as one of short packet structure 600 or long packet structure 610. Short packet structure 600 may be selected - e.g., rather than long packet structure 610 - to format touch sensor data communications where, at least for some short-term timeframe, an operational mode of a sink device is capable of processing only a relatively limited amount of touch sensor data. By contrast, long packet structure 610 may be selected to format touch sensor data communications while the sink device is configured to process a larger amount of touch sensor data - e.g. an entire frame of data generated with a touch sensor array. The particular sizes, orders and types of information variously represented in short packet structure 600 and long packet structure 610 are merely illustrative of one embodiment, and may vary according to different embodiments.

Short packet structure 600 may comprise a data identifier (DI) byte including a two bit value to identify a particular virtual channel associated with the packet and a six bit value to identify a data type (e.g., touch sensor data) associated with the packet. Short packet structure 600 may further comprise two bytes of payload data - e.g., where a least significant byte (LSB) is communicated before a most significant byte (MSB). In an embodiment, another byte of short packet structure 600 is to provide an error correction code based on the two bytes of payload data.

Long packet structure 610 may comprise a DI byte that, for example, has a structure similar to that of short packet structure 600. Two bytes of word count (WC) information in long packet structure 610 may communicate, for example, a total number of words of payload data included in long packet structure 610. In an embodiment, another byte of long packet structure 610 is to provide an error correction code based on the two bytes of WC information. Long packet structure 610 may further comprise some amount - e.g., up to 65,535 bytes - of payload data including touch sensor data from a source device. In an embodiment, some additional byte or bytes (e.g., at least two bytes) of long packet structure 600 provide a check-sum or other error detection/correction information based on the payload data of long packet structure 610.

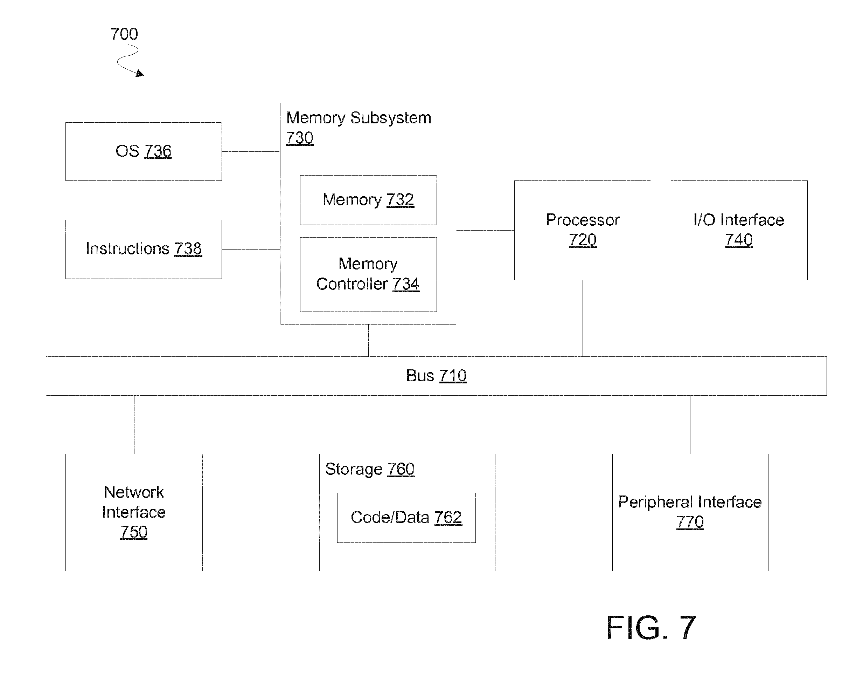

FIG. 7 is a block diagram of an embodiment of a computing system in which processing of touch sensor information may be implemented. System 700 represents a computing device in accordance with any embodiment described herein, and may be a laptop computer, a desktop computer, a server, a gaming or entertainment control system, a scanner, copier, printer, or other electronic device. System 700 may include processor 720, which provides processing, operation management, and execution of instructions for system 700. Processor 720 may include any type of microprocessor, central processing unit (CPU), processing core, or other processing hardware to provide processing for system 700. Processor 720 controls the overall operation of system 700, and may be or include, one or more programmable general-purpose or special-purpose microprocessors, digital signal processors (DSPs), programmable controllers, application specific integrated circuits (ASICs), programmable logic devices (PLDs), or the like, or a combination of such devices.

Memory subsystem 730 represents the main memory of system 700, and provides temporary storage for code to be executed by processor 720, or data values to be used in executing a routine. Memory subsystem 730 may include one or more memory devices such as read-only memory (ROM), flash memory, one or more varieties of random access memory (RAM), or other memory devices, or a combination of such devices. Memory subsystem 730 stores and hosts, among other things, operating system (OS) 736 to provide a software platform for execution of instructions in system 700. Additionally, other instructions 738 are stored and executed from memory subsystem 730 to provide the logic and the processing of system 700. OS 736 and instructions 738 are executed by processor 720.

Memory subsystem 730 may include memory device 732 where it stores data, instructions, programs, or other items. In one embodiment, memory subsystem includes memory controller 734, to access memory 732 - e.g., on the behalf of processor 720. Processor 720 and memory subsystem 730 are coupled to bus/bus system 710. Bus 710 is an abstraction that represents any one or more separate physical buses, communication lines/interfaces, and/or point-to-point connections, connected by appropriate bridges, adapters, and/or controllers. Therefore, bus 710 may include, for example, one or more of a system bus, a Peripheral Component Interconnect (PCI) bus, a HyperTransport or industry standard architecture (ISA) bus, a small computer system interface (SCSI) bus, a universal serial bus (USB), or an Institute of Electrical and Electronics Engineers (IEEE) standard 1394 bus (commonly referred to as "Firewire"). The buses of bus 710 may also correspond to interfaces in network interface 750.

System 700 may also include one or more input/output (I/O) interface(s) 740, network interface 750, one or more internal mass storage device(s) 760, and peripheral interface 770 coupled to bus 710. I/O interface 740 may include one or more interface components through which a user interacts with system 700 (e.g., video, audio, and/or alphanumeric interfacing). In one embodiment, I/O interface 740 includes a touch controller to operate a touch sensor array that is included in or coupled to I/O interface 740. The touch controller may be coupled via a D-PHY to digital processor logic that is to perform digital processing of touch sensor information that is provided by the touch controller - e.g., with techniques and/or mechanisms discussed herein. Such digital processor logic may reside, for example, in I/O interface 740 or processor 720.

Network interface 750 provides system 700 the ability to communicate with remote devices (e.g., servers, other computing devices) over one or more networks. Network interface 750 may include an Ethernet adapter, wireless interconnection components, USB (universal serial bus), or other wired or wireless standards-based or proprietary interfaces.

Storage 760 may be or include any conventional medium for storing large amounts of data in a nonvolatile manner, such as one or more magnetic, solid state, or optical based disks, or a combination. Storage 760 holds code or instructions and data 762 in a persistent state (i.e., the value is retained despite interruption of power to system 700). Storage 760 may be generically considered to be a "memory," although memory 730 is the executing or operating memory to provide instructions to processor 720. Whereas storage 760 is nonvolatile, memory 730 may include volatile memory (i.e., the value or state of the data is indeterminate if power is interrupted to system 700).

Peripheral interface 770 may include any hardware interface not specifically mentioned above. Peripherals refer generally to devices that connect dependently to system 700. A dependent connection is one where system 700 provides the software and/or hardware platform on which operation executes, and with which a user interacts.

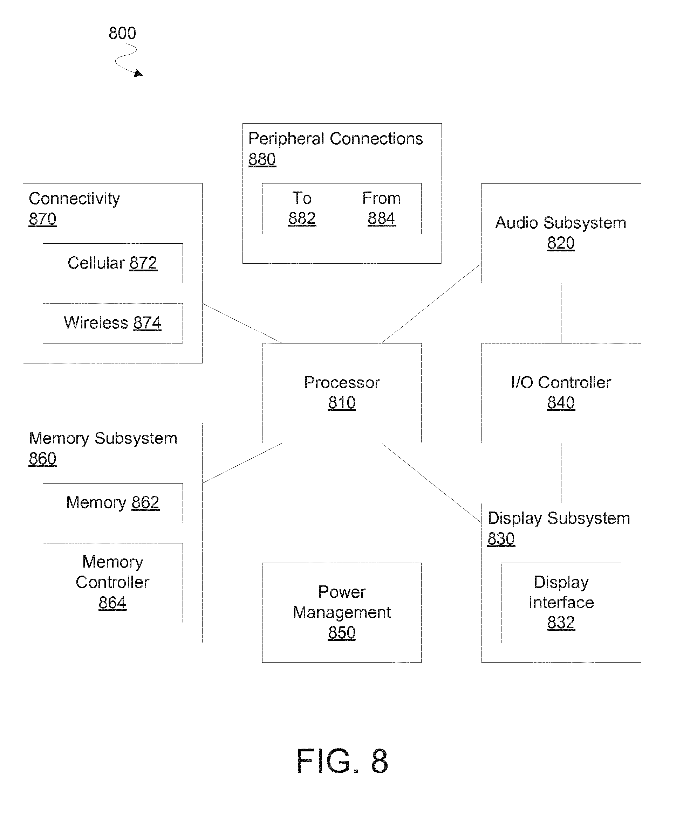

FIG. 8 is a block diagram of an embodiment of a mobile device in which processing of touch sensor information may be implemented. Device 800 represents a mobile computing device, such as a computing tablet, a mobile phone or smartphone, a wireless-enabled e-reader, or other mobile device. It will be understood that certain of the components are shown generally, and not all components of such a device are shown in device 800.

Device 800 may include processor 810, which performs the primary processing operations of device 800. Processor 810 may include one or more physical devices, such as microprocessors, application processors, microcontrollers, programmable logic devices, or other processing means. The processing operations performed by processor 810 include the execution of an operating platform or operating system on which applications and/or device functions are executed. The processing operations include operations related to I/O (input/output) with a human user or with other devices, operations related to power management, and/or operations related to connecting device 800 to another device. The processing operations may also include operations related to audio I/O and/or display I/O.

In one embodiment, device 800 includes audio subsystem 820, which represents hardware (e.g., audio hardware and audio circuits) and software (e.g., drivers, codecs) components associated with providing audio functions to the computing device. Audio functions may include speaker and/or headphone output, as well as microphone input. Devices for such functions may be integrated into device 800, or connected to device 800. In one embodiment, a user interacts with device 800 by providing audio commands that are received and processed by processor 810.

Display subsystem 830 represents hardware (e.g., display devices) and software (e.g., drivers) components that provide a visual and/or tactile display for a user to interact with the computing device. Display subsystem 830 may include display interface 832, which may include the particular screen or hardware device used to provide a display to a user. In one embodiment, display interface 832 includes logic separate from processor 810 to perform at least some processing related to the display. In one embodiment, display subsystem 830 includes a touchscreen device that provides both output and input to a user.

I/O controller 840 represents hardware devices and software components related to interaction with a user. I/O controller 840 may operate to manage hardware that is part of audio subsystem 820 and/or display subsystem 830. Additionally, I/O controller 840 illustrates a connection point for additional devices that connect to device 800 through which a user might interact with the system. For example, devices that may be attached to device 800 might include microphone devices, speaker or stereo systems, video systems or other display device, keyboard or keypad devices, or other I/O devices for use with specific applications such as card readers or other devices.

As mentioned above, I/O controller 840 may interact with audio subsystem 820 and/or display subsystem 830. For example, input through a microphone or other audio device may provide input or commands for one or more applications or functions of device 800. Additionally, audio output may be provided instead of or in addition to display output. In another example, if display subsystem includes a touchscreen, the display device also acts as an input device, which may be at least partially managed by I/O controller 840. There may also be additional buttons or switches on device 800 to provide I/O functions managed by I/O controller 840.

In one embodiment, I/O controller 840 manages devices such as accelerometers, cameras, light sensors or other environmental sensors, gyroscopes, global positioning system (GPS), or other hardware that may be included in device 800. The input may be part of direct user interaction, as well as providing environmental input to the system to influence its operations (such as filtering for noise, adjusting displays for brightness detection, applying a flash for a camera, or other features). In one embodiment, I/O controller 840 includes a touch controller to operate a touch sensor array that is included therein or coupled thereto. The touch controller may be coupled via a D-PHY to digital processor logic that is to perform digital processing of touch sensor information that is provided by the touch controller - e.g., with techniques and/or mechanisms discussed herein.

In one embodiment, device 800 includes power management 850 that manages battery power usage, charging of the battery, and features related to power saving operation. Memory subsystem 860 may include memory device(s) 862 for storing information in device 800. Memory subsystem 860 may include nonvolatile (state does not change if power to the memory device is interrupted) and/or volatile (state is indeterminate if power to the memory device is interrupted) memory devices. Memory 860 may store application data, user data, music, photos, documents, or other data, as well as system data (whether long-term or temporary) related to the execution of the applications and functions of system 800.

In one embodiment, memory subsystem 860 includes memory controller 864 (which could also be considered part of the control of system 800, and could potentially be considered part of processor 810). Memory controller 864 may communicate signaling to access memory 862 - e.g., on behalf of processor 810.

Connectivity 870 may include hardware devices (e.g., wireless and/or wired connectors and communication hardware) and software components (e.g., drivers, protocol stacks) to enable device 800 to communicate with external devices. The device could be separate devices, such as other computing devices, wireless access points or base stations, as well as peripherals such as headsets, printers, or other devices.

Connectivity 870 may include multiple different types of connectivity. To generalize, device 800 is illustrated with cellular connectivity 872 and wireless connectivity 874. Cellular connectivity 872 refers generally to cellular network connectivity provided by wireless carriers, such as provided via GSM (global system for mobile communications) or variations or derivatives, CDMA (code division multiple access) or variations or derivatives, TDM (time division multiplexing) or variations or derivatives, LTE (long term evolution - also referred to as "4G"), or other cellular service standards. Wireless connectivity 874 refers to wireless connectivity that is not cellular, and may include personal area networks (such as Bluetooth), local area networks (such as WiFi), and/or wide area networks (such as WiMax), or other wireless communication. Wireless communication refers to transfer of data through the use of modulated electromagnetic radiation through a non-solid medium. Wired communication occurs through a solid communication medium.

Peripheral connections 880 include hardware interfaces and connectors, as well as software components (e.g., drivers, protocol stacks) to make peripheral connections. It will be understood that device 800 could both be a peripheral device ("to" 882) to other computing devices, as well as have peripheral devices ("from" 884) connected to it. Device 800 commonly has a "docking" connector to connect to other computing devices for purposes such as managing (e.g., downloading and/or uploading, changing, synchronizing) content on device 800. Additionally, a docking connector may allow device 800 to connect to certain peripherals that allow device 800 to control content output, for example, to audiovisual or other systems.

In addition to a proprietary docking connector or other proprietary connection hardware, device 800 may make peripheral connections 880 via common or standards-based connectors. Common types may include a Universal Serial Bus (USB) connector (which may include any of a number of different hardware interfaces), DisplayPort including MiniDisplayPort (MDP), High Definition Multimedia Interface (HDMI), Firewire, or other type.

In one implementation, a device comprises analog circuitry configured to receive an output from a touch sensor array and first differential physical layer (D-PHY) logic coupled to the analog circuitry, the first D-PHY logic including circuitry configured, during a data transmission mode of the device, to send first touch sensor data from the device to a sink device, the first touch sensor data based on the output, wherein any generation of a software interrupt message or a firmware interrupt message in response to detection of a gesture event based on the output is performed after the first touch sensor data is received by the sink device. The device further comprises first protocol logic configured to exchange control signals with the sink device, and based on the control signals, to configure the data transmission mode of the device.

In an embodiment, the first D-PHY logic is based on a MIPI D-PHY standard. In another embodiment, the first D-PHY logic is to couple the device to a system-on-chip including the sink device. In another embodiment, the sink device generates digital data based on the first touch sensor data, and evaluates the digital data based first reference information to detect for a touch event, the first reference information including one or more touch event criteria. In another embodiment, the sink device further evaluates the digital data based on second reference information to detect for a gesture event, the second reference information including one or more gesture event criteria. In another embodiment, the device further comprises the touch sensor array, and driver circuitry configured to activate the touch sensor array.

In another embodiment, any detection of a touch event based on the output is performed after the first touch sensor data is received by the sink device. In another embodiment, the first D-PHY logic is to couple the device to the sink device via an interconnect, wherein the first protocol logic to exchange control signals with the sink device includes the first protocol logic to exchange a bus turnaround message to transfer control of the interconnect. In another embodiment, the first protocol logic is to configure the device to control the interconnect during a transmission of a data packet to the sink device. In another embodiment, the first protocol logic is to configure the device to control the interconnect during a transmission of a configuration request packet to the sink device.

In another implementation, a device comprises first protocol logic including circuitry configured to generate control signals, and first differential physical layer (D-PHY) logic to couple the device to a source device, the first D-PHY logic further to send the control signals to the source device, wherein, based on the control signals, a data transmission mode of the source device is configured, the first D-PHY logic further to receive first touch sensor data from the source device during the data transmission mode, the first touch sensor data based on an analog output from a touch sensor array. The device further comprises digital processor logic configured to process digital data based on the first touch sensor data, wherein any generation of a software interrupt message or a firmware interrupt message in response to detection of a gesture event based on the output is performed after the first touch sensor data is received by the device.

In an embodiment, the first D-PHY logic is based on a MIPI D-PHY standard. In another embodiment, the device comprises a system-on-chip to couple to the source device. In another embodiment, the digital processor logic to process digital data based on the first touch sensor data comprises the digital processor logic to generate the digital data based on the first touch sensor data, and to evaluate the digital data based first reference information to detect for a touch event, the first reference information including one or more touch event criteria. In another embodiment, the digital processor logic to process digital data based on the first touch sensor data further comprises the digital processor logic to evaluate the digital data based on second reference information to detect for a gesture event, the second reference information including one or more gesture event criteria.

In another embodiment, any detection of a touch event based on the output is performed after the first touch sensor data is received by the sink device. In another embodiment, the first D-PHY logic is to couple the device to the source device via an interconnect, wherein the first protocol logic to exchange with the source device a bus turnaround message to transfer control of the interconnect. In another embodiment, the first protocol logic is to transfer to the source device control of the interconnect to enable a transmission of a data packet to the device. In another embodiment, the first protocol logic is to transfer to the source device control of the interconnect to enable a transmission of a configuration request packet to the device.

In another implementation, a method at a source device, coupled to a sink device, comprises receiving an analog output from a touch sensor array, exchanging control signals with the sink device via first differential physical layer (D-PHY) logic of the source device, configuring a data transmission mode of the source device based on the control signals, and during the data transmission mode of the source device, sending first touch sensor data from the first D-PHY logic to the sink device, wherein any generation of a software interrupt message or a firmware interrupt message in response to detection of a gesture event based on the output is performed after the first touch sensor data is received by the sink device.

In an embodiment, the first D-PHY logic is based on a MIPI D-PHY standard. In another embodiment, the first D-PHY logic couples the source device to a system-on-chip including the sink device. In another embodiment, the sink device generates digital data based on the first touch sensor data, and evaluates the digital data based first reference information to detect for a touch event, the first reference information including one or more touch event criteria. In another embodiment, the sink device further evaluates the digital data based on second reference information to detect for a gesture event, the second reference information including one or more gesture event criteria.

In another embodiment, the method further comprises the touch sensor array and driver circuitry configured to activate the touch sensor array. In another embodiment, any detection of a touch event based on the output is performed after the first touch sensor data is received by the sink device. In another embodiment, the first D-PHY logic to couple the source device to the sink device via an interconnect, and wherein the first protocol logic to exchange control signals with the sink device includes the first protocol logic to exchange a bus turnaround message to transfer control of the interconnect. In another embodiment, the first protocol logic to configure the source device to control the interconnect during a transmission of a data packet to the sink device. In another embodiment, the first protocol logic to configure the source device to control the interconnect during a transmission of a configuration request packet to the sink device.

In another implementation, a method at a sink device, coupled to a source device, comprises generating control signals with first protocol logic of the sink device, and with first differential physical layer (D-PHY) logic of the sink device, sending the control signals to the source device, wherein, based on the control signals, a data transmission mode of the source device is configured. The method further comprises, during the data transmission mode of the source device, receiving via the first D-PHY first touch sensor data from the source device, the first touch sensor data based on an analog output from a touch sensor array, and processing digital data based on the first touch sensor data, wherein any generation of a software interrupt message or a firmware interrupt message in response to detection of a gesture event based on the output is performed after the first touch sensor data is received by the sink device.

In an embodiment, the first D-PHY logic is based on a MIPI D-PHY standard. In another embodiment, the sink device comprises a system-on-chip coupled to the source device. In another embodiment, processing the digital data based on the first touch sensor data comprises generating the digital data based on the first touch sensor data, and evaluating the digital data based first reference information to detect for a touch event, the first reference information including one or more touch event criteria. In another embodiment, processing the digital data based on the first touch sensor data further comprises evaluating the digital data based on second reference information to detect for a gesture event, the second reference information including one or more gesture event criteria.

In another embodiment, any detection of a touch event based on the output is performed after the first touch sensor data is received by the sink device. In another embodiment, the first D-PHY logic couples the sink device to the source device via an interconnect, and wherein the first protocol logic exchanges with the source device a bus turnaround message to transfer control of the interconnect. In another embodiment, the first protocol logic transfers to the source device control of the interconnect to enable a transmission of a data packet to the sink device. In another embodiment, the first protocol logic transfers to the source device control of the interconnect to enable a transmission of a configuration request packet to the sink device.

In another implementation, a system comprises a sink device, an interconnect, and a source device coupled to the sink device via the interconnect. The source device includes analog circuitry configured to receive an output from a touch sensor array, and first differential physical layer (D-PHY) logic coupled to the analog circuitry, the first D-PHY logic including circuitry configured, during a data transmission mode of the source device, to send first touch sensor data from the source device to the sink device via the interconnect, the first touch sensor data based on the output, wherein any generation of a software interrupt message or a firmware interrupt message in response to detection of a gesture event based on the output is performed after the first touch sensor data is received by the sink device. The source device further includes first protocol logic configured to exchange control signals with the sink device, and based on the control signals, to configure the data transmission mode of the source device.

In an embodiment, the first D-PHY logic is based on a MIPI D-PHY standard. In another embodiment, the first D-PHY logic couples the source device to a system-on-chip including the sink device. In another embodiment, the sink device to generate digital data based on the first touch sensor data, and to evaluate the digital data based first reference information to detect for a touch event, the first reference information including one or more touch event criteria. In another embodiment, the sink device further to evaluate the digital data based on second reference information to detect for a gesture event, the second reference information including one or more gesture event criteria.

In another embodiment, the system further comprises the touch sensor array and driver circuitry configured to activate the touch sensor array. In another embodiment, any detection of a touch event based on the output is performed after the first touch sensor data is received by the sink device. In another embodiment, the first D-PHY logic to couple the source device to the sink device via an interconnect, and wherein the first protocol logic to exchange control signals with the sink device includes the first protocol logic to exchange a bus turnaround message to transfer control of the interconnect. In another embodiment, the first protocol logic to configure the source device to control the interconnect during a transmission of a data packet to the sink device. In another embodiment, the first protocol logic to configure the source device to control the interconnect during a transmission of a configuration request packet to the sink device.

Techniques and architectures for processing touch sensor information are described herein. In the above description, for purposes of explanation, numerous specific details are set forth in order to provide a thorough understanding of certain embodiments. It will be apparent, however, to one skilled in the art that certain embodiments can be practiced without these specific details. In other instances, structures and devices are shown in block diagram form in order to avoid obscuring the description.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

Some portions of the detailed description herein are presented in terms of algorithms and symbolic representations of operations on data bits within a computer memory. These algorithmic descriptions and representations are the means used by those skilled in the computing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the discussion herein, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Certain embodiments also relate to apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but is not limited to, any type of disk including floppy disks, optical disks, CD-ROMs, and magnetic-optical disks, read-only memories (ROMs), random access memories (RAMs) such as dynamic RAM (DRAM), EPROMs, EEPROMs, magnetic or optical cards, or any type of media suitable for storing electronic instructions, and coupled to a computer system bus.

The algorithms and displays presented herein are not inherently related to any particular computer or other apparatus. Various general purpose systems may be used with programs in accordance with the teachings herein, or it may prove convenient to construct more specialized apparatus to perform the required method steps. The required structure for a variety of these systems will appear from the description herein. In addition, certain embodiments are not described with reference to any particular programming language. It will be appreciated that a variety of programming languages may be used to implement the teachings of such embodiments as described herein.

Besides what is described herein, various modifications may be made to the disclosed embodiments and implementations thereof without departing from their scope. Therefore, the illustrations and examples herein should be construed in an illustrative, and not a restrictive sense. The scope of the invention should be measured solely by reference to the claims that follow.

## Claims

1. A device comprising:
analog circuitry configured to receive an output from a touch sensor array;
first differential physical layer (D-PHY) logic coupled to the analog circuitry, the first D-PHY logic including circuitry configured, during a data transmission mode of the device, to send first touch sensor data from the device to a sink device, the first touch sensor data based on the output, wherein any generation of a software interrupt message or a firmware interrupt message in response to identification of an occurrence of a gesture event based on the output is performed after the first touch sensor data is received by the sink device; and
first protocol logic configured to exchange control signals with the sink device, and based on the control signals, to configure the data transmission mode of the device.

2. The device of claim 1, wherein the first D-PHY logic is based on a MIPI D-PHY standard.

3. The device of any of claims 1 and 2, the first D-PHY logic to couple the device to a system-on-chip including the sink device.

4. The device of any of claims 1 through 3, wherein the sink device generates digital data based on the first touch sensor data, and evaluates the digital data based first reference information to detect for a touch event, the first reference information including one or more touch event criteria.

5. The device of claim 4, wherein the sink device further evaluates the digital data based on second reference information to detect for a gesture event, the second reference information including one or more gesture event criteria.

6. The device of any of claims 1 through 3, further comprising:
the touch sensor array; and
driver circuitry configured to activate the touch sensor array.

7. The device of any of claims 1 through 3, wherein any detection of a touch event based on the output is performed after the first touch sensor data is received by the sink device.

8. The device of any of claims 1 through 3, the first D-PHY logic to couple the device to the sink device via an interconnect, and wherein the first protocol logic to exchange control signals with the sink device includes the first protocol logic to exchange a bus turnaround message to transfer control of the interconnect.

9. A device comprising:
first protocol logic including circuitry configured to generate control signals;
first differential physical layer (D-PHY) logic to couple the device to a source device, the first D-PHY logic further to send the control signals to the source device, wherein, based on the control signals, a data transmission mode of the source device is configured, the first D-PHY logic further to receive first touch sensor data from the source device during the data transmission mode, the first touch sensor data based on an analog output from a touch sensor array; and
digital processor logic configured to process digital data based on the first touch sensor data, wherein any generation of a software interrupt message or a firmware interrupt message in response to identification of an occurrence of a gesture event based on the analog output is performed after the first touch sensor data is received by the device.

10. The device of claim 9, wherein the digital processor logic to process digital data based on the first touch sensor data comprises the digital processor logic to generate the digital data based on the first touch sensor data, and to evaluate the digital data based first reference information to detect for a touch event, the first reference information including one or more touch event criteria.

11. The device of claim 10, wherein the digital processor logic to process digital data based on the first touch sensor data further comprises the digital processor logic to evaluate the digital data based on second reference information to detect for a gesture event, the second reference information including one or more gesture event criteria.

12. The device of any of claims 9 and 10, wherein any detection of a touch event based on the analog output is performed after the first touch sensor data is received by the sink device.

13. A method at a source device coupled to a sink device, the method comprising:
receiving an analog output from a touch sensor array;
exchanging control signals with the sink device via first differential physical layer (D-PHY) logic of the source device;
based on the control signals, configuring a data transmission mode of the source device;
and
during the data transmission mode of the source device, sending first touch sensor data from the first D-PHY logic to the sink device, the first touch sensor data based on the analog output, wherein any generation of a software interrupt message or a firmware interrupt message in response to identification of an occurrence of a gesture event based on the analog output is performed after the first touch sensor data is received by the sink device.

14. A method at a sink device coupled to a source device, the method comprising:
generating control signals with first protocol logic of the sink device;
with first differential physical layer (D-PHY) logic of the sink device, sending the control signals to the source device, wherein, based on the control signals, a data transmission mode of the source device is configured;
during the data transmission mode of the source device, receiving via the first D-PHY logic first touch sensor data from the source device, the first touch sensor data based on an analog output from a touch sensor array; and
processing digital data based on the first touch sensor data, wherein any generation of a software interrupt message or a firmware interrupt message in response to identification of an occurrence of a gesture event based on the analog output is performed after the first touch sensor data is received by the sink device.

15. The method of claim 14, wherein processing the digital data based on the first touch sensor data comprises generating the digital data based on the first touch sensor data, and evaluating the digital data based first reference information to detect for a touch event, the first reference information including one or more touch event criteria.
